## Europäisches Patentamt
## European Patent Office
## Office européen des brevets

(19)

(11) Numéro de publication: **0 048 650**
**B1**

(12) # FASCICULE DE BREVET EUROPEEN

(45) Date de publication du fascicule du brevet:
**06.06.84**

(51) Int. Cl.³: **F 16 D 3/22**

(21) Numéro de dépôt: **81401373.6**

(22) Date de dépôt: **01.09.81**

(54) Perfectionnements aux joints universels, et agrafe de maintien pour de tels joints.

(30) Priorité: **24.09.80 FR 8020523**

(43) Date de publication de la demande:
**31.03.82 Bulletin 82/13**

(45) Mention de la délivrance du brevet:
**06.06.84 Bulletin 84/23**

(84) Etats contractants désignés:
**DE GB IT**

(56) Documents cités:
**FR - A - 1 444 895**
**FR - A - 2 101 414**

(73) Titulaire: **AUTOMOBILES CITROEN, 117-167 Quai André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Petiot, Jean Paul, 14, rue de la Bergerie, F-91300 Massy (FR)**

(74) Mandataire: **Michardière, Bernard et al, Cabinet Plasseraud 84, rue d'Amsterdam, F-75009 Paris (FR)**

# Description

L'invention est relative aux joints universels du genre de ceux qui comprennent un élément extérieur, sensiblement en forme de bol, comportant un alésage cylindrique dans lequel sont réalisées des pistes un élément intérieur logé dans cet alésage et présentant une surface externe convexe munie de rainures, et des organes de liaison, notamment des billes, diposées respectivement dans une piste de l'élément extérieur et dans une rainure de l'élément intérieur, ces organes de liaison étant maintenus par une cage qui présente une surface interne concave propre à coopérer avec la surface externe convexe de l'élément intérieur, et une surface externe convexe, des moyens de positionnement démontables étant, en outre, prévus pour arrêter la cage par rapport à l'élément extérieur.

De tels joints universels sont utilisés, notamment, pour la transmission homocinétique de mouvements de rotation dans les véhicules automobiles.

Selon les cas, la transmission du mouvement de rotation peut s'accompagner d'un coulissement de l'élément intérieur par rapport à l'élément extérieur (joints unversels coulissants), ou peut s'effectuer sans mouvement de coulissement axial de l'élément intérieur par rapport à l'élément extérieur (joints universels fixes).

Le document FR-A-1 444 895 montre un joint universel destiné à assurer la transmission du mouvement de rotation en autorisant un débattement angulaire important entre l'élément extérieur et l'élément intérieur, mais sans permettre un mouvement axial relatif entre ces deux éléments. Ce joint ne comporte pas une cage de maintien des billes; toutefois, les billes engagées dans les chemins de roulement de la noix et de la cloche sont positionnées par deux flasques, tenant lieu de cage, à savoir un flasque interne et un flasque externe, ces deux flasques suivant les débattements angulaires relatifs de l'élément intérieur par rapport à l'élément extérieur.

Le document FR-A-2 101 414 concerne un joint universel autorisant un mouvement axial relatif ainsi qu'un mouvement angulaire relatif entre les organes intérieur et extérieur. Ce joint comporte une cage de maintien des billes.

L'invention a pour but, surtout, de fournir un joint universel du genre défini précédemment, dans lequel les moyens de positionnement de la cage par rapport à l'élément extérieur soient simples et peu coûteux, et permettent un montage ou un démontage aisé et rapide de la cage à l'intérieur de l'élément extérieur, de telle sorte que l'on puisse transformer facilement un joint universel coulissant en un joint universel fixe ou inversement.

Selon l'invention, un joint universel du genre défini précédemment, est caractérisé par le fait que les susdits moyens de positionnement démontables de la cage sont constitués par une agrafe de maintien, expansible, comportant au moins deux pattes diamétralement opposées, propres à entourer la cage et présentant une forme concave de manière à coopérer avec la surface externe de cette cage, ces pattes étant engagées dans des rainures pratiquées, entre deux pistes, dans la paroi interne de l'élément extérieur, ladite agrafe comportant, en outre, des moyens d'immobilisation sur l'élément extérieur.

Un même élément extérieur pourra ainsi être utilisé soit pour un joint fixe, en combinaison avec l'agrafe, soit pour un joint coulissant dépourvu de l'agrafe. Il en résulte une fabrication plus simple et un nombre de pièces stockées plus réduit.

Les pattes de l'agrafe s'étendent longitudinalement suivant une direction sensiblement parallèle à l'axe de l'élément extérieur, et sont solidaires d'un anneau dont le plan moyen est orthogonal à la direction moyenne des pattes.

De préférence, l'agrafe comporte quatre pattes régulièrement espacées angulairement, des rainures correspondantes étant prévues dans l'élément extérieur.

Les moyens d'immobilisation de l'agrafe sur l'élément extérieur sont avantageusement formés par des crochets élastiques recourbés présentant une extrémité élargie et une zone de moindre largeur, cette zone étant propre à être introduite, par déformation élastique du crocher, dans une encoche prévuè dans une collerette de l'élément extérieur.

L'invention est également relative à une agrafe de maintien d'une cage pour joint universel, cette agrafe comportant les caractéristiques évoquées précédemment.

L'invention consiste, mises à part les dispositions exposées ci-dessus, en certaines autres dispositions dont il sera plus explicitement question ci-après à propos d'un mode de réalisation particulier de l'invention, mais qui n'est nullement limitatif.

La fig. 1, de ces dessins, est une coupe axiale d'un joint universel selon l'invention, par un plan diamétral passant par les centres de deux billes opposées.

La fig. 2 est une coupe diamétrale du joint par un plan équidistant de deux billes voisines.

La fig. 3 est une coupe suivant III-III fig. 1 de l'élément extérieur.

La fig. 4 est une coupe suivant IV-IV, fig. 5 de l'agrafe.

La fig. 5 est une vue de gauche, par rapport à la fig. 4, de l'agrafe.

La fig. 6, enfin, est une vue partielle, en élévation, de l'élément extrieur et des moyens d'accrochage de l'agrafe sur cet élément extérieur.

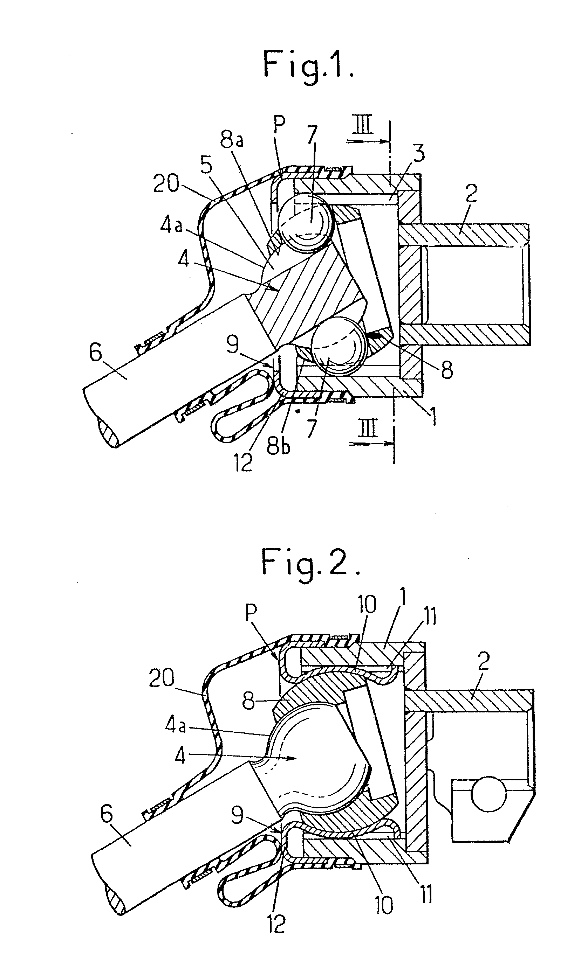

En se reportant aux dessins, notamment aux fig. 1 et 2, on peut voir un joint universel qui comprend un élément extérieur sensiblement en forme de bol 1, solidaire d'un arbre menant 2. Le bol 1 comporte un alésage cylindrique dans la paroi duquel sont réalisées quatre pistes 3, rectilignes, orientées suivant les génératrices du bol cylindrique 1. Les pistes, formées par des cannelures, sont régulièrement réparties angulairement.

Le joint comporte également un élément intérieur 4, logé dans l'alésage du bol 1 et présentant
une surface externe 4a convexe munie de rainures 5, rectilignes. Cet élément intérieur 4 est
solidaire d'un arbre mené 6. L'élément 4 peut
être formé par un prolongement de cet arbre,
présentant une forme sphérique.

Le joint universel comporte, en outre, des organes de liaison formés par des billes 7 disposées respectivement dans une piste 3 de l'élément extérieur 1 et dans une rainure 5 de l'élément intérieur 4.

Une cage 8 maintient les billes 7; cette cage
présente une surface interne 8a concave sphérique destinée à coopérer avec la surface 4a de
forme sphérique de l'élément intérieur 4, et une
surface extérieure 8b de forme convexe sphérique.

Des moyens de positionnement démontables
P sont prévus pour arrêter la cage 8 par rapport
à l'élément extérieur 1. Lorsque ces moyens P
sont montés dans le joint universel, ce joint
constitue une articulation fixe et l'élément intérieur 4 oscille autour d'un point fixe par rapport à
l'élément extérieur 1.

Lorsque les moyens de positionnement P sont
démontés, l'élément intérieur 5, peut coulisser
axialement dans l'élément extérieur 1 et le joint
universel devient un joint universel coulissant.

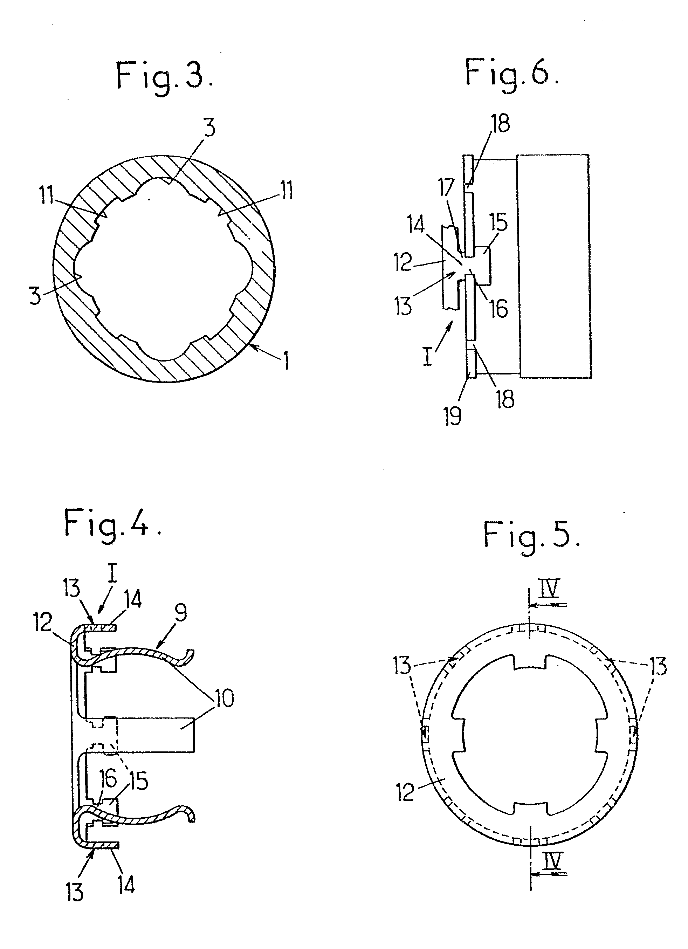

Les moyens de positionnement P sont constitués par une agrafe de maintien 9 expansible, en
tôle. Cette agrafe 9 comprend par exemple, quatre pattes 10 régulièrement espacées angulairement. Ces pattes s'étendent longitudinalement
suivant une direction moyenne parallèle à l'axe
de l'élément extérieur 1, et sont propres à serrer
élastiquement la cage 8. Chaque patte 10 a une
forme concave suivant la direction longitudinale,
de manière à coopérer avec la surface externe
de la cage 8. Les pattes 10 sont engagées, au
moins en partie, dans des rainures 11 (fig. 3) correspondantes prévues dans l'élément extérieur
1. Comme visible sur la fig. 3, les rainures 11 sont
réalisées entre deux pistes 3.

Les pattes 10 sont solidaires du bord intérieur
d'un anneau 12 (fig. 4) dont le plan moyen est
orthogonal à la direction longitudinale moyenne
de chaque patte.

Des moyens d'immobilisation I sont prévus
pour arrêter l'agrafe 9 sur l'élément extérieur 1.
Ces moyens d'immobilisation I sont formés par
des crochets recourbés 13 prévus sur le bord
extérieur, suivant le sens radial, de l'anneau 12;
ces crochets 13 comportent une partie extérieure
14 s'étendant suivant une direction longitudinale
sensiblement parallèle à celle des pattes 10. Les
crochets recourbés 13 ont une certaine élasticité et présentent une extrémité élargie 15 (fig. 6)
terminant la partie 14, et une zone de moindre
largeur 16 située entre l'extrémité 15 et une autre
partie élargie 17 formant un rebord de l'anneau
12. Ces parties ou zones 15, 16 et 17 sont situées sensiblement dans un plan orthogonal au plan de
l'anneau 12. La zone de moindre largeur 16 est
réalisée en pratiquant des encoches sur les deux
bords latéraux de la partie 14.

Cette zone de moindre largeur 16 du crochet
13 est destinée à être introduite dans une encoche 18 prévue dans une collerette 19, du bol 1,
formée à l'extrémité de ce bol ouverte vers l'extérieur.

Le franchissement de la collerette 19 par l'extrémité élargie 15 est assuré par déformation
élastique du crochet 13, en écartant la partie 14,
dans le sens radial, des languettes 10. Lorsque la
zone 16 arrive au droit de l'encoche 18, la partie
extérieure 14 est relâchée et reprend sa position
normale, ce qui provoque l'entrée de la zone 16
dans l'encoche 18 et le verrouillage de l'agrafe 9
sur le bol 1.

Le nombre de crochets élastiques 13 peut être
égal à huit comme représenté sur les dessins; les
positions angulaires de ces crochets correspondent à celles des quatre pistes 3 et des quatre
rainures 11.

Une gaine d'étanchéité souple 20 protège le
joint universel et est montée, à une de ses extrémités, sur le bol 1 en entourant l'agrafe 9 et, à son
autre extrémité sur l'arbre 6.

Le montage de l'ensemble s'effectue de la
manière suivante.

Dans un premier temps, l'agrafe 9 est montée
sur la cage 8 portant les billes 7 engagées dans
les rainures 5 de l'élément intérieur 4, par déformation élastique des pattes 10.

Dans un second temps, cet ensemble est introduit à l'intérieur du bol 1, les billes 7, s'engageant dans les pistes 3, tandis que les pattes 10
s'engagent dans les rainures 11.

L'ensemble est rendu solidaire, en translation,
du bol 1 par l'engagement, dans les encoches 18
de la collerette 19, des zones de moindre largeur
16 par déformation élastique des crochets 13. La
gaine d'étanchéité 20 est ensuite montée.

L'assemblage du joint universel formant articulation fixe est alors terminé.

L'arbre peut osciller librement autour d'un
point fixe par rapport au bol 1, la cage 8 oscillant
librement dans le réceptacle formé par les pattes
10; le couple de rotation entre l'arbre menant 2 et
l'arbre mené 6 est transmis par les billes 7.

Dans le cas où l'on souhaite utiliser le bol 1
pour réaliser un joint universel coulissant il suffit
de ne pas utiliser l'agrafe 9 pour laisser à l'élément intérieur 4 une possibilité de coulissement.

Le même élément extérieur 1 peut ainsi être
utilisé soit pour un joint fixe, soit pour un joint
coulissant.

**Revendications**

1. Joint universel comprenant un élément extérieur sensiblement en forme de bol (1), comportant un alésage cylindrique dans lequel sont réalisées des pistes (3), un élément intérieur (4)
logé dans cet alésage et présentant une surface externe (4a) convexe muni de rainures (5), et des organes de liaison, notamment des billes (7), disposés respectivement dans une piste de l'élément extérieur et dans une rainure de l'élément intérieur, ces organes de liaison étant maintenus par une cage (8) qui présente une surface interne (8a) concave propre à coopérer avec la surface (4a) externe convexe de l'élément intérieur, et une surface externe convexe (8b), des moyens de positionnement démontables (P) étant, en outre, prévus pour arrêter la cage (8) par rapport à l'élément extérieur (1), caractérisé par le fait que les susdits moyens de positionnement démontables de la cage (8) sont constitués par une agrafe (9) de maintien, expansible, comportant au moins deux pattes (10) diamétralement opposées, propres à entourer la cage (8) et présentant une forme concave de manière à coopérer avec la surface externe de cette cage, ces pattes étant engagées dans des rainures (11) pratiquées entre deux pistes (3), dans la paroi interne de l'élément extérieur, ladite agrafe comportant, en outre, des moyens d'immobilisation (I) sur l'élément extérieur (1).

2. Joint universel selon la revendication 1, caractérisé par le fait que les pattes (10) de l'agrafe (9) s'étendent longitudinalement suivant une direction sensiblement parallèle à l'axe de l'élément extérieur (1), et sont solidaires d'un anneau (12) dont le plan moyen est orthogonal à la direction moyenne des pattes.

3. Joint universel selon la revendication 1 ou 2, caractérisé par le fait que l'agrafe (9) comporte quatre pattes (10) régulièrement espacées angulairement, des rainures (11) correspondantes étant prévues dans l'élément extérieur (1).

4. Joint universel selon l'une quelconque des revendications précédentes, caractérisé par le fait que les moyens d'immobilisation (I) de l'agrafe (9) sur l'élément extérieur (1) sont formés par des crochets élastiques recourbés (13) présentant une extrémité (15) élargie et une zone (16) de moindre largeur, cette zone (16) étant propre à être introduite, par déformation élastique du crochet, dans une encoche (18) prévue dans une collerette (19) de l'élément extérieur (1).

5. Joint universel selon la revendication 4, caractérisé par le fait que l'agrafe (9) comporte huit crochets (13).

6. Agrafe de maintien d'une cage pour joint universel, selon l'une quelconque des revendications précédentes, caractérisée par le fait qu'elle comprend au moins deux pattes (10) diamétralement opposées et ayant une forme concave, ces deux pattes (10) étant solidaires d'un anneau (12) dont le plan moyen est orthogonal à la direction moyenne des pattes, ces pattes (10) étant propres à coopérer avec la surface externe de la cage (8) du joint et à être engagées dans des rainures (11) de la paroi interne de l'élément extérieur (1), cette agrafe comportant, en outre, des moyens d'immobilisation (I) sur l'élément extérieur.

7. Agrafe selon la revendication 6, caractérisée par le fait que les moyens d'immobilisation (I) sont formés par des crochets élastiques recourbés (13) présentant une extrémité (15) élargie et une zone (16) de moindre largeur, cette zone (16) étant propre à être introduite, par déformation élastique du crochet, dans une encoche (18) prévue dans une collerette (19) de l'élément extérieur (1).

**Patentansprüche**

1. Kreuzgelenk

— mit einem becherförmigen äußeren Element (1), mit einer zylindrischen Bohrung, in der Laufbahnen (3) angebracht sind,
— mit einem in dieser Bohrung aufgenommenen inneren Element (4), das eine mit Nuten (5) versehene konvexe Außenfläche (4a) aufweist,
— mit Verbindungsorganen, insbesondere Kugeln (7), die jeweils in einer Laufbahn des äußeren Elementes und einer Nut des inneren Elementes angeordnet und durch einen Käfig (8) gehalten sind, der eine mit der konvexen Außenfläche (4a) des inneren Elementes zusammenwirkende konkave Innenfläche (8a) sowie eine konvexe Außenfläche (8b) aufweist,
— sowie mit demontierbaren Positionierungsmitteln (P) zur Positionierung und zur Halterung des Käfigs (8) an dem äußeren Element (1),

dadurch gekennzeichnet,

— daß die genannten demontierbaren Positionierungsmittel zur Positionierung des Käfigs (8) von einer ausdehnbaren Stützklemme (9) gebildet sind, die wenigstens zwei diametral einander gegenüberliegende Klauen (10) besitzt, welche den Käfig (8) umgeben und eine mit der Außenfläche des Käfigs zusammenwirkende konkave Form aufweisen,
— daß die Klauen in Nuten (11) eingreifen, die zwischen zwei Laufbahnen (3) in der Innenwandung des äußeren Elementes angebracht sind,
— und daß die Stützklemme ferner Festlegungsmittel (I) zu ihrer Festlegung an dem äußeren Element (1) umfaßt.

2. Kreuzgelenk nach Anspruch 1, dadurch gekennzeichnet, daß die Klauen (10) der Stützklemme (9) sich longitudinal in einer annähernd parallel zur Achse des äußeres Elementes (1) verlaufenden Richtung erstrecken und mit einem Ring (12) fest verbunden sind, dessen Mittelebene senkrecht zur mittleren Richtung der Klauen verläuft.

3. Kreuzgelenk nach Anspruch 1 oder 2, dadurch gekennzeichnet, daß die Stützklemmen (9) vier in regelmäßigem Winkelabstand angeordnete Klauen (10) besitzt und daß in dem äußeren Element (1) entsprechende Nuten (11) vorgesehen sind.

4. Kreuzgelenk nach einem der vorhergehenden Ansprüche, dadurch gekennzeichnet, daß die Festlegungsmittel (I) zur Festlegung der Stützklemme (9) an dem äußeren Element (1) von umgebogenen elastischen Haken (13) gebildet sind, die einen verbreiterten Endbereich (15) und eine Zone (16) geringerer Breite aufweisen, die durch elastische Verformung des Hakens in eine in einem Kragen (19) des äußeren Elementes (1) vorgesehene Ausnehmung (18) einführbar sind.

5. Kreuzgelenk nach Anspruch 4, dadurch gekennzeichnet, daß die Stützklemme (9) acht der genannten Haken (13) besitzt.

6. Stützklemme zur Halterung eines Käfigs für ein Kreuzgelenk nach einem der vorhergehenden Ansprüche, dadurch gekennzeichnet, daß sie wenigstens zwei diametral einander gegenüberliegende und konkav geformte Klauen aufweist, die mit einem Ring (12) fest verbunden sind, dessen Mittelebene senkrecht zur mittleren Richtung der Klauen verläuft, und daß die Klauen (10) so ausgebildet sind, daß sie mit der Außenfläche des Käfigs (8) des Kreuzgelenks zusammenwirken und in Nuten (11) der Innenwandung des äußeren Elementes (1) eingreifen können, und daß die Stützklemme ferner Festlegungsmittel (I) zu ihrer Festlegung an dem äußeren Element aufweist.

7. Stützklemme nach Anspruch 6, dadurch gekennzeichnet, daß die Festlegungsmittel (I) von umgebogenen elastischen Haken (13) gebildet sind, die einen verbreiterten Endbereich (15) sowie eine Zone (16) geringerer Breite besitzen, und daß diese Zone (16) durch elastische Verformung des Hakens in eine in einem Kragen (19) des äußeren Elementes (1) vorgesehene Ausnehmung (18) einführt.

## Claims

1. A universal joint comprising a substantially bowl-shaped outer element (1) formed with a cylindrical bore in which tracks (3) are devised, an inner element (4) housed in said bore and having a convex outer surface (4a) provided with grooves (5), and connecting means, more particularly balls (7), disposed respectively in a track in the outer element and in a groove in the inner element, said connecting means being held by a cage (8) which has a concave inner surface (8a) adapted to co-operate with the convex outer surface (4a) of the inner element, and a convex outer surface (8b), removable positioning means (P) also being provided to retain the cage (8) with respect to the outer element (1) characterised in that the said removable positioning means of the cage (8) are in the form of an expansible holding clip (9) having at least two diametrically opposite lugs (10) adapted to surround the cage (8) and having a concave shape so as to co-operate with the outer surface of said cage, said lugs being engaged in grooves (11) formed between two tracks (3) in the inner wall of the outer element, the said clip also comprising means for locking it (I) on the outer element (1).

2. A universal joint according to claim 1, characterised in that the lugs (10) of the clip (9) extend longitudinally in a direction substantially parallel to the axis of the outer element (1) and are integral with a ring (12), the central plane of which is at right angles to the central direction of the lugs.

3. A universal joint according to claim 1 or 2, characterised in that the clip (9) has four lugs (10) regularly spaced angularly, corresponding grooves (11) being provided in the outer element (1).

4. A universal joint according to any one of the preceding claims, characterised in that the means (I) for locking the clip (9) on the outer element (I) are in the form of curved elastic hooks (13) having a widened end (15) and a narrower zone (16), the said zone (16) being adapted for introduction, by elastic deformation of the hook, into a notch (18) provided in a collar (19) of the outer element (1).

5. A universal joint according to claim 4, characterised in that the clip (9) has eight hooks (13).

6. A holding clip for a cage for a universal joint, according to any one of the preceding claims, characterised in that it comprises at least two diametrically opposite lugs (10) of concave shape, said two lugs (10) being integral with a ring (12), the central plane of which is at right angles to the central direction of the lugs, said lugs (10) being adapted to co-operate with the outer surface of the cage (8) of the joint and being engaged in grooves (11) in the inner wall of the outer element (1), said clip also comprising means for locking it (I) on the outer element.

7. A clip according to claim 6, characterised in that the locking means (I) are in the form of curved elastic hooks (13) having a widened end (15) and a narrower zone (16), said zone (16) being adapted for introduction, by elastic deformation of the hook, into a notch (18) provided in a collar (19) of the outer element (1).

# Fig.1.

# Fig.2.

# Fig.3.

# Fig.6.

# Fig.4.

# Fig.5.